# EUROPEAN PATENT SPECIFICATION

(11) **EP 1 680 590 B1**
(45) Date of publication and mention of the grant of the patent: **15.07.2009**
(21) Application number: 04791435.3
(22) Date of filing: 07.10.2004
(51) Int. Cl.: F02M 31/087, F02M 25/022

(54) **A METHOD OF REDUCING THE NITROGEN OXIDE EMISSIONS (NOX) OF A SUPERCHARGED PISTON ENGINE AND A PISTON ENGINE ARRANGEMENT**
VERFAHREN ZUR REDUZIERUNG VON STICKOXIDEMISSIONEN (NOX) EINES AUFGELADENEN KOLBENMOTORS UND KOLBENMOTORANORDNUNG
PROCEDE DE REDUCTION DES EMISSIONS D'OXYDE D'AZOTE (NOX) D'UN MOTEUR A PISTON SURALIMENTE ET DISPOSITIF DE MOTEUR A PISTON

(30) Priority: 15.10.2003 FI 20031513
(43) Date of publication of application: 19.07.2006
(73) Proprietor: Wärtsilä Finland Oy, 65380 Vaasa (FI)
(72) Inventor: HUPLI, Juhani, I-34100 Trieste (IT)
(74) Representative: Gustafsson, Aulis Valdemar
(86) International application number: PCT/FI2004/050143
(87) International publication number: WO 2005/038229

(56) References cited:
- EP-A2- 0 916 836
- WO-A1-03/078819
- DE-A1- 4 231 681
- DE-A1- 19 538 067
- DE-C1- 4 225 050
- US-B1- 6 405 686

## Description

The present invention relates to a method as described in the preamble of claim 1 and a piston engine arrangement according to preamble of claim 7.

Nitrogen oxides (NOx) are formed in high combustion temperatures in the combustion chamber of a cylinder of a piston engine, the nitrogen oxides being released into the atmosphere. Because the nitrogen oxide emissions are detrimental to environment there is a tendency to try and minimise the emissions.

It is known that adding water to the combustion together with the combustion air reduces the formation of nitrogen oxide emissions. This phenomenon is based, among others, on the cooling effect of water. In practice, the introduction of water into the combustion chamber of a piston engine is carried out in three alternative ways so that water is introduced directly into the combustion chamber of the engine, water is introduced with fuel as fuel emulsion or water is introduced via inlet duct along combustion air.

Publication US 5,758,505 discloses a method for introducing water into the combustion air subsequent to the supercharger. The water is first heated with the engine cooling water and fed into a separate moistening column, where the water, sprayed into mist, is vaporised. Such an arrangement is impractical due, among others, the space requirement of the moistening column and it also causes a certain safety risk, as the large moistening column is operated under high pressure.

Publications WO 03/078819 and DE 4231681 disclose a method of reducing nitrogen oxide (NOx) emissions of a piston engine. In the method the combustion air moisturized and heated prior to feeding it to the combustion chamber of the engine.

Introducing water into the combustion chamber with the combustion air is preferable, because it does not reduce the shaft efficiency of the engine. However, the temperature of the combustion air must in some conditions be elevated to a relative high level in order to maintain the air humidity on a level high enough for reducing the nitrogen oxides. The maximum amount of water introduced in vaporised form into the combustion chamber can therefore be the amount that stays in gaseous form in the pressure and temperature conditions of the combustion air, and therefore a solution, preferable in its entirety, is needed for increasing and maintaining the temperature of the combustion air.

The aim of the invention is to provide an improved method and arrangement of reducing the nitrogen oxide emissions of a supercharged piston engine, but with the drawbacks of prior art essentially eliminated. In more detail the aim if the invention is to provide a method and arrangement for increasing and maintaining the inlet air temperature at a suitable level, higher than the ambient temperature.

The aims of the invention are mainly achieved as disclosed in the appended claims 1 and 7 and disclosed in more detail in other claims.

In a method according to the invention for reducing the nitrogen oxide (NOx) emissions of a supercharged piston engine the pressure of the combustion air is during the operation of the engine elevated to a level higher than that of the ambient pressure by means of a compressor apparatus and, further, the moisture level of the combustion air is increased and, additionally, heat is introduced into the combustion air prior to feeding it to the combustion chamber of the engine. The heat which is introduced into the combustion air is obtained from the exhaust gases of the engine i.e. the heat is transferred to the combustion air. A partial flow is separated therefrom prior to directing the exhaust gases into the turbine part of the compressor apparatus, whereby the heat transferred into the combustion air is taken from the separated partial flow. The separated partial flow is combined with the exhaust gas flow subsequent to the turbine part of the compressor apparatus.

Preferably heat is transferred into the combustion air in a temperature approximately corresponding to the temperature of the exhaust gases prior to feeding them into the turbine part of the compressor apparatus. Thus, the temperature is as high as possible and the combustion air is heated by means of a heat exchanger having a relatively small area.

According to one embodiment the efficiency of the heat transfer is controlled by adjusting the volume of the partial flow, which in tum is controlled by adjusting the throttling of the partial flow. The volume of the partial flow is controlled according to the load of the engine so that the volume of the partial flow is proportional to the load of the engine. For example, with very light loads the volume of partial flow is small.

Preferably the moisture of the combustion air is increased in a number of stages, but preferable at least a part of that is carried out subsequent to heat being transferred from the exhaust gases to the combustion air.

In a piston engine arrangement according to the invention comprising a number of cylinders, a turbocharger comprising a compressor part arranged in flow connection with each cylinder through the combustion air channel and a turbine part arranged in flow connection with each cylinder through the exhaust gas channel, there is a nozzle arrangement for introducing water to the combustion air channel and a heat exchanger arranged in heat transfer connection with the combustion air channel. The said heat exchanger is in heat transfer connection with the exhaust gases. In the arrangement the heat exchanger is arranged so that it is in flow connection with the exhaust gas channel prior to and subsequent to the turbine part of the turbocharger, thereby the pressure difference caused by the turbine part can be used for exhaust gas flow via the heat exchanger as well.

According to one embodiment the flow connection between the heat exchanger and the exhaust gas channel is arranged by means of a channel and a control valve attached thereto, whereby the volume of flow can be adjusted by throttling and opening the said control valve.

Many advantages can be achieved by means of the invention, such as a considerably more effective reduction of nitrogen oxides from the exhaust gases. Further, the invention provides a space-saving solution effectively utilising the heat loss of the engine is achieved.

In the following the invention is described by way of example and with reference to the appended drawings, of which
figure 1 schematically illustrates an embodiment according to the invention, and
figure 2 schematically illustrates another embodiment according to the invention,

In the figures, reference number 1 refers to a piston engine connected to a turbocharger 2 in a way known as such. A fuel injector nozzle is arranged in connection with each cylinder for introducing fuel into the engine. A nozzle arrangement 4 for introducing water into the combustion air is arranged into the air channel 3 connecting the turbocharger 2 and the air channel 3, by means of which air is fed to the engine.. A corresponding nozzle arrangement 4' is also arranged prior to the compressor of the turbocharger. The nozzle arrangement 4, 4' is connected to the water system, shown in the figures with reference number 10. Depending on the application it will also comprise a water source and it can also comprise a water pre-heater apparatus, the heat source of which preferably is the heat generated in the engine. A heat exchanger arrangement 5 is also arranged in the air channel 3 for increasing the temperature of the combustion air. The channel can comprise other heat exchangers as wen. The channel 3 is connected to the air chamber 8 of the engine 1, wherefrom air is Introduced into each cylinder of the engine via channel 3. The figures also show a droplet separator 6 used In the arrangement, if necessary. The nozzle arrangement 4, 4' is used for increasing the water content of the combustion air prior to introducing combustion air to the combustion chamber of the engine. The amount of water introduced into the air is preferably selected so that the air is essentially saturated. Typically the amount of water introduced with the combustion air is about 0.5 to 5 times the amount of fuel. According to the invention water is introduced into the air channel 3 as a liquid. Thus, the vaporisation of water in the air channel 3 uses the heat of air, and to avoid the temperature of the air failing too low and for simultaneously being able to vaporise a sufficient amount of water into the air, heat is introduced into the engine combustion air flowing in the air channel by means of a heat exchanger arrangement 5.

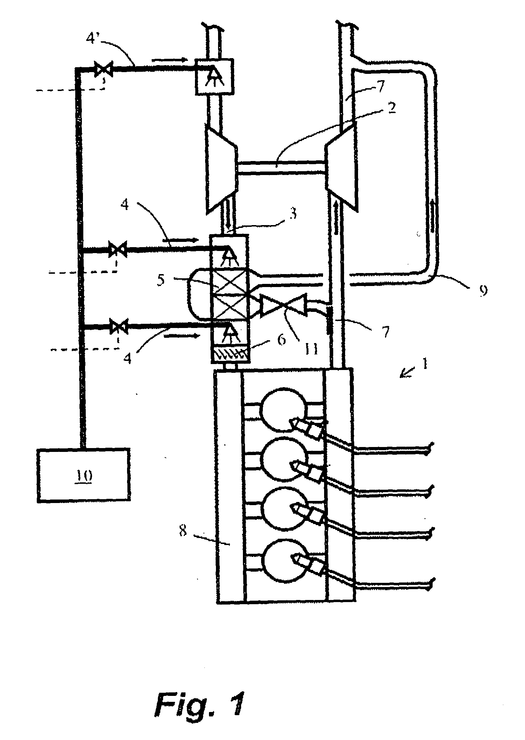

In the embodiment of figure 1 in the exhaust gas channel 7 of the engine, prior to the point wherefrom the exhaust gases are directed to the turbine part of the compressor apparatus 2, there is arranged a branch channel 9 through which the partial flow of the exhaust gas flow is directed to flow via the heat exchanger arrangement 5. Thus, a part of the heat energy of the exhaust gas coming from the engine combustion chamber can be transferred to the combustion air and thus such a combustion air temperature can be maintained that a sufficient amount of water can be vaporised therein and that a sufficient amount of water stays in vapour phase. Thus, the energy of the exhaust gases is used for vapourizing the water in combustion air. The branch channel 9 is thus in connection with the heat transfer apparatus 5, through which hot exhaust gas is arranged to flow. The branch channel is arranged to join back to the exhaust gas channel 7 subsequent to the turbine part of the compressor apparatus, and it is provided with a valve apparatus 11 for controlling the volume of the partial flow. The flow flowing through the branch channel 9 is initiated by the pressure difference caused by the turbine part of the compressor apparatus 2, and the volume of the flow can be adjusted by means of controlling the position of the valve apparatus 11. Preferably, the control is carried out on basis of the current load of the engine and also on the comparison between the measurement value and the set value of the combustion air temperature.

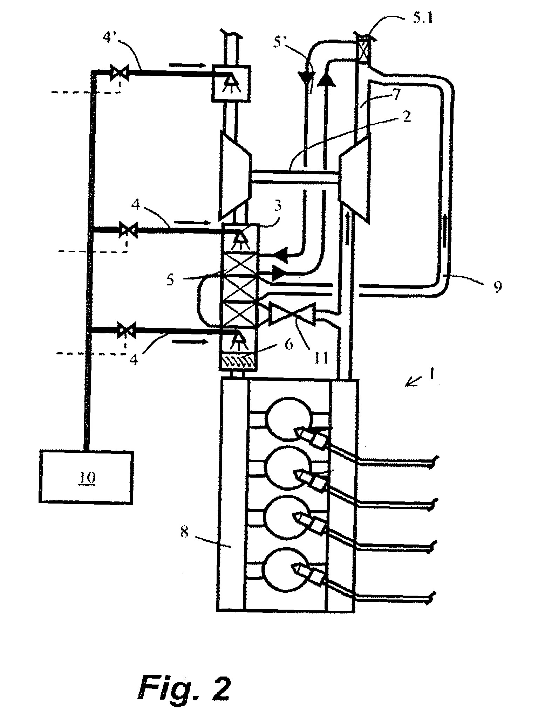

In the embodiment shown in figure 2 the arrangement comprises both a heat exchanger 5 in the exhaust gas channel for directly transferring heat from the exhaust gas and a second heat exchanger 5, connected to the separate heat transfer medium circuit 5' further comprising a second heat exchanger 5.1 arranged in the exhaust gas channel.

Preferably, the amount of water introduced into the combustion air is adjusted on the basis of the load of the engine, of which the pressure of the combustion air, for example, could be a suitable indicator. The amount of water introduced into the combustion air is adjusted by opening and closing a suitable amount of water injection nozzles as necessary, while the injection pressure at each nozzle is about constant. Thus, both a preferable atomising or misting of the water and a correct amount of water in the combustion air, are achieved.

The invention is not limited to the embodiments described here, but a number of modifications thereof can be conceived of within the scope of the appended claims.

## Claims

1. A method of reducing the nitrogen oxide emissions (NOx) of a supercharged piston engine (1), in which method the pressure of the combustion air is elevated to a level higher than that of the ambient pressure by means of a compressor apparatus (2) and in which the moisture level is elevated (4, 4') and heat is introduced (5, 5'. 5.1) to the combustion air prior to feeding it to the combustion chamber of the engine, **characterized in that** heat (5, 5', 5.1) obtained from the engine exhaust gases is transferred into the combustion air, that a partial flow (9) is separated from the exhaust gas flow of the engine prior to directing the exhaust gases into the turbine part of the compressor apparatus (2), that the heat to be transferred to the combustion air is taken from the separated partial flow, and that after the heat exchange the separated partial flow is combined with the exhaust gas flow subsequent to the turbine part of the compressor apparatus (2).

2. A method according to claim 1, **characterized in that** heat is transferred into the combustion air in a temperature approximately corresponding to the temperature of the exhaust gases prior to introducing them into the turbine part of the compressor apparatus (2).

3. A method according to claim 2, **characterized in that** after the heat exchange the separated partial flow is combined with the exhaust gas flow subsequent to the turbine part of the compressor apparatus (2) and that the volume of the partial flow is adjusted by adjusting the throttling of the partial flow.

4. A method according to claim 2. **characterized in that** the volume of the partial flow is adjusted in relation to the load of the engine so that the volume of the partial flow is proportional to the load of the engine.

5. A method according to any of the previous claims, **characterized in that** the moisture of the combustion air is increased at least subsequent to the heat transfer (5, 5', 5.1) from the exhaust gases to the combustion air.

6. A method according to claim 1, **characterized in that** heat is further transferred from the engine exhaust gases by means of a second heat exchanger (5.1) arranged in the exhaust gas channel to a heat transfer medium circuit (5'), from which heat is further transferred to the combustion air.

7. A piston engine arrangement (1) comprising a number of cylinders, a turbocharger (2) comprising a compressor part arranged in flow connection with each cylinder through the combustion air channel (3) and a turbine part arranged in flow connection with each cylinder through the exhaust gas channel. (7), the arrangement comprising a nozzle arrangement (4, 4') for introducing water to the combustion air channel (3) and a heat exchanger (5) arranged in heat transfer connection with the combustion air channel, **characterized in that** the heat exchanger is in heat transfer connection with the exhaust gases, and that the heat exchanger is in flow connection with the exhaust gas channel (7) prior to and subsequent to the turbine part of the turbocharger (2).

8. A piston engine arrangement according to claim 7, **characterized in that** the flow connection to the exhaust gas channel is arranged by means of a channel (9) and an adjusting valve (11) arranged thereto.

9. A piston engine arrangement according to claim 7, **characterized by** a heat transfer medium circuit (5') for transferring heat to the combustion air, the heat transfer medium circuit (5') comprising a second heat exchanger (5.1) arranged in the exhaust gas chancel.

## Patentansprüche

1. Verfahren zur Reduzierung der Stickoxidemissionen (NOx) eines aufgeladenen Kolbenmotors (1), wobei bei diesem Verfahren der Druck der Verbrennungsluft mittels einer Verdichtervorrichtung (2) auf einen Wert erhöht wird, der über dem Wert von Umgebungsluft liegt, und wobei der Feuchtigkeitsgehalt der Verbrennungsluft erhöht wird (4, 4') und die Verbrennungsluft erwärmt wird (5, 5', 5.1), bevor sie in den Brennraum des Motors eingeleitet wird, **dadurch gekennzeichnet, dass** aus den Motorabgasen gewonnene Wärme (5, 5', 5.1) in die Verbrennungsluft übertragen wird, dass ein Teilstrom (9) von dem Abgasstrom des Motors abgetrennt wird, bevor die Abgase in den Turbinenteil der Verdichtervorrichtung (2) gerichtet werden, dass die in die Verbrennungsluft zu übertragende Wärme aus dem abgetrennten Teilstrom entnommen wird und dass nach dem Wärmetausch der abgetrennte Teilstrom hinter dem Turbinenteil der Verdichtervorrichtung (2) mit dem Abgasstrom vereinigt wird.

2. Verfahren nach Anspruch 1, **dadurch gekennzeichnet, dass** Wärme mit einer Temperatur, die ungefähr der Temperatur der Abgase entspricht, in die Verbrennungsluft übertragen wird, bevor die Abgase in den Turbinenteil der Verdichtervorrichtung (2) eingeleitet werden.

3. Verfahren nach Anspruch 2, **dadurch gekennzeichnet, dass** nach dem Wärmetausch der abgetrennte Teilstrom hinter dem Turbinenteil der Verdichtervorrichtung (2) mit dem Abgasstrom vereinigt wird und dass das Volumen des Teilstroms durch Justieren der Drosselung des Teilstroms justiert wird.

4. Verfahren nach Anspruch 2, **dadurch gekennzeichnet, dass** das Volumen des Teilstroms in einer solchen Weise relativ zur Last des Motors justiert wird, dass das Volumen des Teilstroms in einem proportionalen Verhältnis zur Last des Motors steht.

5. Verfahren nach einem der vorangehenden Ansprüche, **dadurch gekennzeichnet, dass** der Feuchtigkeitsgehalt der Verbrennungsluft mindestens nach der Wärmeübertragung (5, 5', 5.1) von den Abgasen zu der Verbrennungsluft erhöht wird.

6. Verfahren nach Anspruch 1, **dadurch gekennzeichnet, dass** Wärme des Weiteren von den Motorabgasen mittels eines zweiten Wärmetauschers (5.1), der im Abgaskanal angeordnet ist, zu dem Wärmeübertragungsmediumkreislauf (5') übertragen wird, von wo aus Wärme weiter zu der Verbrennungsluft übertragen wird.

7. Kolbenmotoranordnung (1), die eine Anzahl von Zylindern sowie einen Turbolader (2) umfasst, der einen Verdichterteil umfasst, der über den Verbrennungsluftkanal (3) in Strömungsverbindung mit jedem Zylinder steht, sowie einen Turbinenteil umfasst, der über den Abgaskanal (7) in Strömungsverbindung mit jedem Zylinder steht, wobei die Anordnung eine Düsenanordnung (4, 4') zum Einleiten von Wasser in den Verbrennungsluftkanal (3) sowie einen Wärmetauscher (5), der in einer Wärmeübertragungsverbindung mit dem Verbrennungsluftkanal steht, umfasst, **dadurch gekennzeichnet, dass** der Wärmetauscher in einer Wärmeübertragungsverbindung mit den Abgasen steht und dass der Wärmetauscher vor und hinter dem Turbinenteil des Turboladers (2) in einer Strömungsverbindung mit dem Abgaskanal (7) steht.

8. Kolbenmotoranordnung nach Anspruch 7, **dadurch gekennzeichnet, dass** die Strömungsverbindung zu dem Abgaskanal mittels eines Kanals (9) und einem darin angeordneten Justierventil (11) hergestellt wird.

9. Kolbenmotoranordnung nach Anspruch 7, **gekennzeichnet durch** einen Wärmeübertragungsmediumkreislauf (5') zum Übertragen von Wärme zu der Verbrennungsluft, wobei der Wärmeübertragungsmediumkreislauf (5') einen zweiten Wärmetauscher (5.1) umfasst, der in dem Abgaskanal angeordnet ist.

## Revendications

1. Procédé de réduction des émissions d'oxyde d'azote (NOx) d'un moteur à piston suralimenté (1), procédé dans lequel la pression de l'air de combustion est élevée à un niveau supérieur à celui de la pression ambiante au moyen d'un appareil de compresseur (2) et dans lequel le niveau d'humidité est élevé (4, 4') et de la chaleur est introduite (5, 5', 5.1) dans l'air de combustion avant de l'injecter dans la chambre de combustion du moteur, **caractérisé en ce que** de la chaleur (5, 5', 5.1) obtenue à partir des gaz d'échappement du moteur est transférée dans l'air de combustion, **en ce que** un flux partiel (9) est séparé du flux de gaz d'échappement du moteur avant de diriger les gaz d'échappement dans la partie de turbine de l'appareil de compresseur (2), **en ce que** la chaleur à transférer à l'air de combustion est prélevée du flux partiel séparé, et **en ce que** après l'échange de chaleur le flux partiel séparé est combiné avec le flux de gaz d'échappement à la suite de la partie de turbine de l'appareil de compresseur (2).

2. Procédé selon la revendication 1, **caractérisé en ce que** de la chaleur est transférée dans l'air de combustion à une température correspondant approximativement à la température des gaz d'échappement avant de les introduire dans la partie de turbine de l'appareil de compresseur (2).

3. Procédé selon la revendication 2, **caractérisé en ce que** après l'échange de chaleur, le flux partiel séparé est combiné avec le flux de gaz d'échappement à la suite de la partie de turbine de l'appareil de compresseur (2) et **en ce que** le volume du flux partiel est ajusté en ajustant l'étranglement du flux.

4. Procédé selon la revendication 2, **caractérisé en ce que** le volume du flux partiel est ajusté en relation avec la charge du moteur de telle sorte que le volume du flux partiel soit proportionnel à la chaleur du moteur.

5. Procédé selon une quelconque des revendications précédentes, **caractérisé en ce que** l'humidité de l'air de combustion est augmentée au moins à la suite du transfert de chaleur (5, 5', 5.1) des gaz d'échappement à l'air de combustion.

6. Procédé selon la revendication 1, **caractérisé en ce que** de la chaleur est en outre transférée des gaz d'échappement du moteur au moyen d'un second échangeur de chaleur (5.1) disposé dans le canal de gaz d'échappement vers un circuit de milieu de transfert de chaleur (5'), duquel de la chaleur est en outre transférée à l'air de combustion.

7. Dispositif de moteur à piston (1) comprenant une pluralité de cylindres, un turbocompresseur (2) comprenant une partie de compresseur disposée en connexion de flux avec chaque cylindre à travers le canal d'air de combustion (3), le dispositif comprenant un dispositif de buse (4, 4') pour introduire de l'eau dans le canal d'air de combustion (7) et un échangeur de chaleur (5) disposé en connexion de transfert de chaleur avec le canal d'air de combustion, **caractérisé en ce que** l'échangeur de chaleur est en connexion de transfert de chaleur avec les gaz d'échappement, et **en ce que** l'échangeur de chaleur est en connexion de flux avec le canal de gaz d'échappement (7) avant et à la suite de la partie de turbine du turbocompresseur (2).

8. Dispositif de moteur à piston selon la revendication 7, **caractérisé en ce que** la connexion de flux vers le canal de gaz d'échappement est agencée au moyen d'un canal (9) et d'une soupape d'ajustement (11) disposée sur celui-ci.

9. Dispositif de moteur à piston selon la revendication 7, **caractérisé par** un circuit de milieu de transfert de chaleur (5') pour transférer de la chaleur à l'air de combustion, le circuit de milieu de transfert de chaleur (5') comprenant un second échangeur de chaleur (5.1) disposé dans le canal de gaz d'échappement.
